(19) **Europäisches Patentamt**
**European Patent Office**
**Office européen des brevets**

(11) **EP 1 862 481 B1**

(12) **EUROPEAN PATENT SPECIFICATION**

(45) Date of publication and mention
of the grant of the patent:
**31.08.2016 Bulletin 2016/35**

(51) Int Cl.:
**C08F 10/00** *(2006.01)*  **C08F 4/651** *(2006.01)*
**C08F 4/655** *(2006.01)*

(21) Application number: **06011312.3**

(22) Date of filing: **31.05.2006**

(54) **CATALYST WITH AL-ALKOXY COMPONENT**

KATALYSATOR MIT AL-ALKOXY-BESTANDTEIL

CATALYSEUR AVEC UN COMPOSANT D'AL-ALKOXY

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**05.12.2007 Bulletin 2007/49**

(73) Proprietor: **Borealis Technology Oy
06101 Porvoo (FI)**

(72) Inventors:
• **Denifl, Peter
6156 Gries am Brenner (AT)**

• **Leinonen, Timo
06750 Tolkkinen (FI)**

(74) Representative: **Grünecker Patent- und
Rechtsanwälte
PartG mbB
Leopoldstraße 4
80802 München (DE)**

(56) References cited:
**EP-A- 1 273 595      EP-A- 1 403 292
EP-A1- 0 949 280     US-A- 2 951 045
US-A- 4 294 948      US-A- 5 409 875
US-A- 5 413 979**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention relates to a process for preparing particulate olefin polymerization catalyst component, particularly one comprising a Group 2 metal. The invention also relates to the use of such a catalyst component for preparing a catalyst, the activity maximum of which is shifted to a higher temperature used in the polymerization of olefins.

## Background of the invention

Ziegler-Natta (ZN) type polyolefin catalysts are well known in the field of polymers, generally, they comprise (a) at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), and, optionally, a compound of group 13 of the Periodic Table (IUPAC) and/or an internal donor compound. ZN catalyst may also comprise (b) further catalyst component(s), such as a cocatalyst and/or an external donor.

Various methods for preparing ZN catalysts are known in the state of art. In one known method, a supported ZN catalyst system is prepared by impregnating the catalyst components on a particulate support material. In WO-A-01 55 230, the catalyst component(s) are supported on a porous, inorganic or organic particulate carrier material, such as silica.

In a further well known method the carrier material is based on one of the catalyst components, e.g. on a magnesium compound, such as MgCl2. This type of carrier material can also be formed in various ways. EP-A-713 886 of Japan Olefins describes the formation of MgCl2 adduct with an alcohol which is then emulsified and finally the resultant mixture is quenched to cause the solidification of the droplets.

Alternatively, EP-A-856 013 of BP discloses the formation of a solid Mg-based carrier, wherein the Mg-component containing phase is dispersed to a continuous phase and the dispersed Mg-phase is solidified by adding the two-phase mixture to a liquid hydrocarbon.

The formed solid carrier particles are normally treated with a transition metal compound and optionally with other compounds for forming the active catalyst.

Accordingly, in case of external carriers, some examples of which are disclosed above, the morphology of the carrier is one of the defining factors for the morphology of the final catalyst.

One disadvantage encountered with the supported catalyst systems is that a possible surface treatment (impregnation step) of the support with one or more catalytically active compounds may lead to non-uniform distribution of the active component(s) and in turn to an inhomogeneous polymer material.

WO-A-00 08073 and WO-A-00 08074 describe further methods for producing a solid ZN-catalyst, wherein a solution of a Mg-based compound and one or more further catalyst compounds are formed and the reaction product thereof is precipitated out of the solution by heating the system. Furthermore, EP-A-926 165 discloses another precipitating method, wherein a mixture of $MgCl_2$ and Mg-alkoxide is precipitated together with a Ti-compound to give a ZN catalyst.

EP-A-83 074 and EP-A-83 073 of Montedison disclose methods for producing a ZN catalyst or a precursor thereof, wherein an emulsion or dispersion of Mg and/or Ti compound is formed in an inert liquid medium or inert gas phase and said system is reacted with an Al-alkyl compound to precipitate a solid catalyst. According to examples said emulsion is then added to a larger volume of Al-compound in hexane and prepolymerised to cause the precipitation.

In general, a drawback of such precipitation methods is the difficulty to control the precipitation step and thus the morphology of the precipitating catalyst particles.

Furthermore, the precipitation of the catalyst component(s) may often proceed via a "tar-like" intermediate stage. Said undesired sticky precipitate agglomerates easily and sticks to the walls of the reactor. The morphology of the catalyst would then of course be lost.

WO 03/000757 describes a process for the preparation of an olefin polymerization catalyst component, enabling to prepare solid particles of a catalyst component comprising a group 2, metal together with a transition metal.

WO 2004/029112 discloses a further process for preparing an olefin polymerization catalyst component, wherein the process is further characterized in that a specific aluminum alkyl .compound is brought into contact with the catalyst component, enabling a certain degree of activity increase at higher temperatures.

US 5,413,979 describes a further method for the preparation of a solid procatalyst composition wherein support materials are impregnated with catalyst component precursors in order to obtain a catalyst component.

US 4,294,948 finally discloses a process for preparing an olefin polymer or copolymer, employing a solid titanium catalyst component prepared by treating pulverized catalyst precursors with organo metallic compounds of a metal of any of groups I or III of the Periodic Table, characterized in that the catalyst preparation occurs using pulverized, solid and particulate precursor materials.

JP-A-1403292, EP-A-1273595, EP-A1-0949280 and US 2951045A also disclose olefin polymerization catalysts.

For some ZN-catalysts it is known in the art that the catalysts have their activity maximum at a relatively low temperature leading to a decreased or even drastically decreased catalyst activity, if polymerization is desired to carry out at higher temperature.

Accordingly, although much development work has been done in the field of Ziegler-Natta catalysts, there remains a need for alternative or improved methods of producing ZN catalysts with desirable properties.

It is of particular interest to obtain a catalyst in particulate form which results in good and desired polymer properties also when used in polymerization processes, where higher temperature are used. I.e. the object of the invention is to provide a catalyst component, yielding a catalyst having a high activity even at higher polymerisation temperatures. In addition it is very desired to have catalysts and further polymer products containing a decreased amount of catalyst residues, especially aluminium residues.

Description of the invention

It has been surprisingly found by the inventors of the present invention that catalyst particles having a good morphology, size and uniform particle size distribution can be obtained by the way of preparing Ziegler-Natta (ZN) type catalysts, for use in olefin polymerization, in particular for propylene polymerisation, identified in the prior art cited above, showing furthermore an increase of activity at higher polymerization temperatures, illustrated herein by the high activity when using a polymerization temperature even of 80°C shown in particular in the examples. In addition it can be shown that the catalyst activity is increased when using higher polymerisation temperatures, illustrated by increasing the polymerisation temperature from 70°C to 80°C. The produced catalyst components according to the invention have excellent morphology, good particle size distribution and yield polymerisation catalysts having an activity maximum at higher temperatures. In addition to the high activity the catalysts have at the same time a very low Al content compared to the ones of prior art. According to the replica effect, the polymer particles produced by using the inventive catalyst have very good morphological properties, too. The inventive catalyst preparation is based on a liquid/liquid two-phase system where no separate external carrier materials such as silica or $MgCl_2$ are needed in order to get solid catalyst particles.

The present invention is therefore directed to a process for preparing an olefin polymerization catalyst component in the form of particles having a predetermined size range as defined in claim 1.

The catalysts known so far show often their highest polymerization activities (activity maximum) at temperatures of about 60 to 70 °C. If the polymerization is carried out at a higher temperature, i.e. above 70 °C, e.g. at around 80 °C or higher, as it is e.g. desirable in some specific processes, the activity of the catalyst is not high enough, because the activity maximum of normal catalyst is at lower temperature. The catalyst activity is in some cases at 80°C about half the activity found at 70°C.

Polymerization processes, where the catalysts of the invention are useful comprise at least one polymerization stage. Typically the polymerization process comprises additional polymerization stages or reactors. In one particular embodiment the process contains at least one bulk reactor zone and at least one gas phase reactor zone, each zones comprising at least one reactor and all reactors being arranged in cascade. In one particularly preferred embodiment the polymerization process for polymerizing olefins, in particular propylene optionally with comonomers, like ethylene or other α-olefins, comprises at least one bulk reactor and at least one gas phase reactor arranged in that order. In some preferred processes the process comprises one bulk reactor and at least two gas phase reactors. The process may further comprise pre- and post reactors. Prereactors comprise typically prepolymerisation reactors. In.these kinds of processes use of higher polymerization temperature (above 70 °C, preferably 80 °C or higher, e.g. 85 °C or higher) either in some or all reactors of the reactor cascade, is preferred in order to achieve some specific properties to the polymers.

The inventors surprisingly found that by adding a small amount of an aluminium alkoxy compound as defined in claim 1, to the liquid/liquid two-phase system during the catalyst component preparation, a catalyst component is obtained yielding a polymerisation catalyst having a clearly improved activity at higher temperatures, like 80 °C or higher. In addition the polymerization activity maximum is shifted to higher temperatures, without destroying the excellent catalyst morphology or, subsequently, polymer morphology. In addition the aluminium content in the final catalyst is reduced notably, compared with the amount added to the catalysts component synthesis and is very small in the final catalyst.

The basic idea and target of the invention was to obtain a catalyst, having a high activity at higher temperatures. In practice from polymerization point of view this means that the new catalysts of the invention are very suitable for polymerization processes where higher temperature (> 70°C) are used, because they have their activity maximum at higher temperature range. This means that the catalyst activity remains about the same or is even improved when the polymerization is carried at higher temperature compared to the catalysts prepared without the aluminium alkoxy compound addition. It should be noted that the activity maximum of the catalyst is not necessary at one single temperature point but rather within a temperature range.

According to the results obtained by the inventors there seem to be three variables, which effect on the results, namely;

- the adding step of Al-compound
- the amount of Al-compound
- the type of Al-compound.

According to the findings of the inventors it appears to be decisive to add the aluminium compound before the particle formation has been completed so that the aluminium compound might serve as a kind of particle-internal cocatalyst. Accordingly, the addition of the aluminium compound may be started from step b) until the completion of the particle formation. The completion of the particle formation is usually achieved when the remaining toluene-soluble components have been washed out from the catalyst particles during solidifying said particles. Thus, the aluminium compound can be preferably added, in pure form or in the form of a solution, from shortly before the beginning of the emulsion formation until adding it to the washing liquid, mostly toluene, in such an amount that the final Al content of the particles is from 0,0 to 0,7%, preferably 0,02 to 0,5% and most preferably 0,04 to 0,3% by weight of the final catalyst particles. The most preferred Al content can vary depending on the type of the Al compound and on the adding step. E.g. in some cases the most preferred amount can be e.g. 0,01 to 0,2 wt%. The Al alkoxy compound to be employed in accordance with the present invention is added during the synthesis of the catalyst component in amounts of Al from 0.01 to 0,25 mol/mol of added metal of Group 2 in the form of Group 2 metal compound, more preferably 0.02 to 0.1 mol/mol of, most preferably 0,03 to 0,08 mol/mol of added Group 2 metal.

The inventors have surprisingly found, however, that the amount of the final Al content in the catalyst component is very small compared to the amount of Al added during the catalyst component preparation. In addition it has been found that the amount of added Al compound needs not to be very high. Without being bound to this theory, it is believed that this is mainly due to the type of Al compound used in the present invention. I.e. Al originating from Al alkoxy compounds apparently is removed more easily from the catalyst than the Al compounds originating from other type of Al compounds as employed in the prior art. However, they have the ability to increase the catalyst activity very effectively. According to the present invention it has thus now been found that by using a specific type of Al compound in catalyst component preparation, the activity at high polymerisation temperatures is increased and still the Al content in the final catalyst is reduced notably.

The inventors found out that the aluminum compounds to be used in the present invention as defined in claim 1 surprisingly enable a further activity increase at higher temperatures. Further, an additional feature is that the catalyst activity maximum is shifted to higher temperature as illustrated by the increase of catalyst activity shown in the examples, comparing catalyst activity at 70°C and 80°C. The aluminium compounds to be employed in accordance with the present invention are characterized in that they comprise at least one alkoxy residue (R) as defined in claim 1, which is preferably a straight chain alkoxy group having from 1 to 6 carbon atoms, most preferably ethoxide. As is furthermore derivable from claim 1, the aluminium compound preferably comprises one or two alkoxy residues, most preferably one alkoxy residue.

In addition, the aluminium compound to be employed may comprise further residues, which independently can be selected from halogens and alkyl groups, preferably straight chain or branched alkyl groups having from 1 to 20, preferably 1 to 10 and more preferably 1 to 6 carbon atoms. Preferably, the aluminium compound to be employed in accordance with the present invention comprises one or two of such further residues (X), which may be identical or dissimilar, more preferably the aluminium compound to be employed in accordance with the present invention comprises two residues X, which preferably are identical. Suitable examples of groups represented by the residue X are halogens, in particular chlorine, bromine or iodine, or alkyl residues, preferably alkyl groups having from 1 to 6 carbon atoms and being straight chain alkyl groups, such as methyl, ethyl, propyl, butyl, pentyl or hexyl, preferably methyl, ethyl, propyl and/or butyl. In particular, preferably the aluminium compound to be employed in accordance with the present invention comprises as residue X one or two ethyl groups, most preferably two ethyl groups.

Illustrative examples of aluminium compounds to be employed in accordance with the present invention are diethyl aluminium ethoxide, ethyl aluminium diethoxide, diethyl aluminium methoxide, diethyl aluminium propoxide, diethyl aluminium butoxide, dichloro aluminium ethoxide, chloro aluminium diethoxide, dimethyl aluminium ethoxide, of which in particular diethyl aluminium ethoxide is preferred.

The new inventive method can be easily scaled up in order to avoid common up-scaling problems in the prior art which led to unsatisfied catalyst morphology and particle size distribution 'as well as reduced activity at higher temperature.

Preferably, the inventive process further comprises washing and drying said recovered solidified particles to obtain said catalyst component in a purified form.

The Group 2 metal used in step a) of the inventive process is preferably magnesium, and the liquid organic medium comprises preferably a $C_6$-$C_{10}$ aromatic hydrocarbon, preferably toluene.

As electron donor compound to be reacted with the Group 2 metal compound is preferably a mono- or diester of an aromatic carboxylic acid or diacid, the latter being able to form a chelate-like structured complex. Said aromatic carboxylic acid ester or diester can be formed in situ by reaction of an aromatic carboxylic acid chloride or diacid dichloride

with a $C_2$-$C_{16}$ alkanol and/or diol, and is preferable dioctyl phthalate.

The reaction for the preparation of the Group 2 metal complex is generally carried out at a temperature of 20° to 80°C, and in case that the Group 2 metal is magnesium, the preparation of the magnesium complex is carried out at a temperature of 50° to 70°C.

The compound of a transition metal is preferably a compound of a Group 4 metal. The Group 4 metal is preferably titanium, and its compound to be reacted with the complex of a Group 2 is preferably a halide.

In a further embodiment of the invention, a compound of a transition metal used in the process can also contain organic ligands typically used in the field known as a single site catalyst.

In a still further embodiment of the invention, a compound of a transition metal can also be selected from Group 5 metals, Group 6 metals, Cu, Fe, Co, Ni and/or Pd compounds.

The complex of the Group 2 metal is preferably a magnesium complex. The invention will henceforth be described in relation to a preferred embodiment of the process, namely to a process for the preparation of a Ziegler-Natta type catalyst.

In a preferred embodiment, the present invention is directed to a process for producing catalysts of the Ziegler-Natta type in the form of particles having a predetermined size range, said process comprising: preparing a solution of magnesium complex by reacting an alkoxy magnesium compound and an electron donor or precursor thereof in a $C_6$-$C_{10}$ aromatic liquid reaction medium; reacting said magnesium complex with a compound of at least one four-valent Group 4 metal at a temperature greater than 10°C and less than 60°C to produce an emulsion of a denser, $TiCl_4$/toluene-insoluble, oil dispersed phase having, Group 4 metal/Mg mol ratio 0.1 to 10 in an oil disperse phase having Group 4 metal/Mg mol ratio 10 to 100; agitating the emulsion, optionally in the presence of an emulsion stabilizer and or a turbulence minimizing agent, in order to maintain the droplets of said dispersed phase within an average size range of 5 to 200 $\mu$m. The catalyst particles are obtained after solidifying said particles of the dispersed phase e.g. by heating.

The said disperse and dispersed phases are thus distinguishable from one another by the fact that the denser oil, if contacted with a solution of titanium tetrachloride in toluene, will not dissolve in it. A suitable solution for establishing this criterion would be one having a toluene mol ratio of 0.1 to 0.3. They are also distinguishable by the fact that the great preponderance of the Mg provided (as complex) for the reaction with the Group 4 metal compound is present in the dispersed phase, as revealed by comparison of the respective Group 4 metal/Mg mol ratios.

In effect, therefore, virtually the entirety of the reaction product of the Mg complex with the Group 4 metal - which is the precursor of the ultimate catalyst component - becomes the dispersed phase, and proceeds through the further processing steps to the final particulate form. The disperse phase, still containing a useful quantity of Group 4 metal, can be reprocessed for recovery of that metal.

The production of a two-phase, rather than single-phase (as in prior practice) reaction product is encouraged by carrying out the Mg complex/Group 4 metal compound reaction at low temperature, specifically above 10°C but below 60°C, preferably between above 20°C and below 50°C. Since the two phases will naturally tend to separate into a lower, denser phase and supernatant lighter phase, it is necessary to maintain the reaction product as an emulsion by agitation, preferably in the presence of an emulsion stabiliser.

The resulting particles from the dispersed phase of the emulsion are of a size, morphology (spherical shape) and uniformity which render the ultimate catalyst component extremely effective in olefin polymerization. This morphology is preserved during the heating to solidify the particles, and of course throughout the final washing and optional drying steps. It is, by contrast, difficult to the point of impossibility to achieve such morphology through precipitation, because of the fundamental uncontrollability of nucleation and growth, and the large number of variables which affect these events.

The electron donor is preferably an aromatic carboxylic acid ester, a particularly favoured ester being dioctyl phthalate. The donor may conveniently be formed in situ by reaction of an aromatic carboxylic acid chloride precursor with a $C_2$-$C_{16}$ alkanol and/or diol. The liquid reaction medium preferably comprises toluene.

Furthermore, emulsifying agents/emulsion stabilisers can be used additionally in a manner known in the art for facilitating the formation and/or stability of the emulsion. For the said purposes e.g. surfactants, e.g. a class based on acrylic or methacrylic polymers can be used. Preferably, said emulsion stabilizers are acrylic or methacrylic polymers, in particular those with medium,sized ester side chains having more than 10, preferably more than 12 carbon atoms and preferably less than 30, and preferably 12 to 20 carbon atoms in the ester side chain. Particular preferred are unbranched $C_{12}$ to $C_{20}$ acrylates such as poly(hexadecyl)-methacrylate and poly(octadecyl)-methacrylate.

Furthermore, in some embodiments a turbulence minimizing agent (TMA) can be added to the reaction mixture in order to improve the emulsion formation and maintain the emulsion structure. By using said TMA, catalyst component particles can be obtained, said particles having very narrow size distribution.

Preferably, the TMA is added to the reaction mixture when the emulsion is formed, however in any case before solidification of the droplets of the dispersed phase starts in order to make sure that a quite uniform particle size distribution can be obtained.

Said TMA agent has to be inert and soluble in the reaction mixture under the reaction conditions, which means that polymers without polar groups are preferred.

Accordingly, said TMA or mixtures thereof are preferred as polymers having linear aliphatic carbon backbone chains, which might be branched with short side chains only in order to serve for uniform flow conditions when stirring. Said TMA is in particular preferably selected from $\alpha$-olefin polymers of $\alpha$-olefin monomers with 6 to 20 carbon atoms, like polyoctene, polynonene, polydecene, polyundecene or polydodecene or mixtures thereof, having the molecular weight and general backbone structure as defined before. Most preferable it is polydecene.

TMA can added to the emulsion in an amount of e.g. 1 to 1.000 ppm, preferably 5 to 100 ppm and more preferable 5 to 50 ppm, based on the total weight of the reaction mixture.

It has been found that the best results are obtained when the Group 4 metal/Mg mol ratio of the denser oil is 1 to 5, preferably 2 to 4, and that of the disperse phase oil is 55 to 65. Generally the ratio of the mol ratio Group 4 metal/Mg in the disperse phase oil to that in the denser oil is at least 10.

Solidification of the dispersed phase droplets by heating is suitably carried out at a temperature of 70-150°C, usually at 80-110°C, preferably at 90-110°C.

The finally obtained catalyst component is desirably in the form of particles having generally an average size range of 5 to 200 $\mu$m, preferably 10 to 100, more preferably 20 to 50 $\mu$m.

The present invention further comprehends an olefin polymerization catalyst comprising a catalyst component prepared as aforesaid, in association with an alkyl aluminium cocatalyst and optionally donors, and the use of that polymerization catalyst for the polymerization Of $C_2$ to $C_{10}$-olefins.

The reagents can be added to the aromatic reaction medium in any order. However it is preferred that in a first step the alkoxy magnesium compound is reacted with a carboxylic acid halide precursor of the electron donor to form an intermediate; and in a second step the obtained product is further reacted with the Group 4 metal. The magnesium compound preferably contains from 1 to 20 carbon atoms per alkoxy group, and the carboxylic acid should contain at least 8 carbon atoms.

Reaction of the magnesium compound, carboxylic acid halide and polyhydric alcohol proceeds satisfactorily at temperatures in the range 20 to 80°C, preferably 50 to 70°C. The product of that reaction, the "Mg complex", is however reacted with the Group 4 metal compound at a lower temperature, contrary to previous practice, to bring about the formation of a two-phase, oil-in-oil, product.

Use of an aromatic medium for preparation of the Mg complex contributes to consistent product morphology and higher bulk density. Catalyst bulk density and morphology correlate with polymer product bulk density and morphology according to the so-called "replication effect".

The technique adopted in the novel regimen of the invention is inherently more precise than that formerly employed, and thus further contributes to product consistency, as well as sharply reducing the volumes of solvent to be handled and thus improving process economics.

The reaction medium used as solvent can be aromatic or a mixture of aromatic and aliphatic hydrocarbons, the latter one containing preferably 5 - 9 carbon atoms, more preferably 5 - 7 carbon atoms, or mixtures thereof. Preferably, the liquid reaction medium used as solvent in the reaction is aromatic and is more preferably selected from hydrocarbons such as substituted and unsubstituted benzenes, preferably from alkylated benzenes, even more preferably from toluene and the xylenes, and is most preferably toluene. The molar ratio of said aromatic medium to magnesium is preferably less than 10, for instance from 4 to 10, preferably from 5 to 9.

The recovered particulate product is washed at least once, preferably at least twice, most preferably at least three times with a hydrocarbon, which preferably is selected from aromatic and aliphatic hydrocarbons, preferably with toluene, particularly with hot (e.g. 80 to 100°C) toluene, which might include a smaller or higher amount of $TiCl_4$ in it. The amount of $TiCl_4$ can vary from a few vol-% to more than 50 vol-%, such as from 5 vol-% to 50 vol-%, preferably up to 30 vol-% and more preferably from 5 to 15 vol-%. It is also possible that at least one wash is done with 100 vol-% $TiCl_4$. One or several further washes after aromatic and/ or $TiCl_4$ washes can be run with aliphatic hydrocarbons of 4 to 8 carbon atoms. Preferable these latter washings are performed with heptane and/or pentane. Washings can be done with hot (e.g. 90°C) or cold (room temperature) hydrocarbons or combinations thereof. It is also possible that all washings will be done with the same solvent, e.g. toluene. According to the one preferred embodiment of the present invention the aluminium alkoxy compound to be used in the catalyst component preparation of the invention can be added to any of the washing mediums, however not to the last or preferably to the two last washings.

The washing can be optimized to give a catalyst component with novel and desirable properties. Finally, the washed catalyst component is recovered. It can further be dried, as by evaporation or flushing with nitrogen, or it can be slurried to an oily liquid without any drying step.

It is preferable that the intermediates as well as the final product of the process be distinct compounds with an essentially stoichiometric composition. Often, they are complexes. A complex is, according to Römpps Chemie-Lexicon, 7. Edition, Franckh'sche Verlagshandlung, W. Keller & Co.,Stuttgart, 1973, page 1831, "a derived name of compounds of higher order, which originate from the combination of *molecules,* - unlike compounds of first order, in the creation of which atoms participate".

The alkoxy magnesium compound group is preferably selected from the group consisting of magnesium dialkoxides, complexes of a magnesium dihalide and an alcohol, and complexes of a magnesium dihalide and a magnesium dialkoxide. It may be a reaction product of an alcohol and a magnesium compound selected from the group consisting of dialkyl magnesiums, alkyl magnesium alkoxides, alkyl magnesium halides and magnesium dihalides. It can further be selected from the group consisting of dialkyloxy magnesiums, diaryloxy magnesiums, alkyloxy magnesium halides, aryloxy magnesium halides, alkyl magnesium alkoxides, aryl magnesium alkoxides and alkyl magnesium aryloxides.

The magnesium dialkoxide may be the reaction product of a magnesium dihalide such as magnesium dichloride or a dialkyl magnesium of the formula $R_2Mg$, wherein each one of the two Rs is a similar or different $C_1$-$C_{20}$ alkyl, preferably a similar or different $C_4$-$C_{10}$ alkyl. Typical magnesium alkyls are ethylbutyl magnesium, dibutyl magnesium, dipropyl magnesium, propylbutyl magnesium, dipentyl magnesium, butylpentylmagnesium, butyloctyl magnesium and dioctyl magnesium. Most preferably, one R of the formula $R_2Mg$ is a butyl group and the other R is an octyl group, i.e. the dialkyl magnesium compound is butyl octyl magnesium.

Typical alkyl-alkoxy magnesium compounds RMgOR, when used, are ethyl magnesium butoxide, butyl magnesium pentoxide, octyl magnesium butoxide and octyl magnesium octoxide.

Dialkyl magnesium, alkyl magnesium alkoxide or magnesium dihalide can react with a monohydric alcohol R'OH, or a mixture thereof with a polyhydric alcohol $R'(OH)_m$.

Typical $C_1$-$C_{20}$ monohydric alcohols are methanol, ethanol, n-propanol, iso-propanol, n-butanol, iso-butanol, sec.butanol, tert.butanol, n-amyl alcohol, iso-amyl alcohol, sec.amyl alcohol, tert.amyl alcohol, diethyl carbinol, akt. amyl alcohol, sec. isoamyl alcohol, tert.butyl carbinol. Typical $C_6$-$C_{10}$ monohydric alcohols are hexanol, 2-ethyl-lbutanol, 4-methyl-2-pentanol, 1-heptanol, 2-heptanol, 4-heptanol, 2,4-dimethyl-3pentanol, 1-octanol, 2-octanol, 2-ethyl-1-hexanol, 1-nonanol, 5-nonanol, dilsobutyl carbinol, 1-decanol and 2,7-dimethyl-2-octanol. Typical $>C_{10}$ monohydric alcohols are n-1-undecanol, n-1-dodecanol, n-1-tridecanol, n-1-tetradecanol, n-1-pentadecanol,1-hexadecanol, n-1-heptadecanol and n- 1 octadecanol. The monohydric alcohols may be unsaturated, as long as they do not act as catalyst poisons.

Preferable monohydric alcohols are those of formula R'OH in which R' is a $C_2$-$C_{16}$ alkyl group, most preferably a $C_4$-$C_{12}$ alkyl group, particularly 2-ethyl-1-hexanol.

The aromatic reaction medium may also contain a polyalcohol, which may be straight- or branched-chain. Typical $C_2$ to $C_6$ polyhydric alcohols may be straight-chain or branched and include ethylene glycol, propylene glycol, trimethylene glycol, 1,2-butylene glycol, 1,3-butylene glycol, 1,4-butylene glycol, 2,3-butylene glycol, 1,5-pentanediol, 1,6-hexanediol, 1,8-octanediol, pinacol, diethylene glycol, triethylene glycol, and triols such as glycerol, methylol propane and pentareythritol. The polyhydric alcohol can be selected on the basis of the activity and morphology it, gives the catalyst component.

Preferably, essentially all of the aromatic carboxylic acid ester is a reaction product of a carboxylic acid halide, preferably a dicarboxylic acid dihalide, more preferably an unsaturated $\alpha,\beta$-dicarboxylic acid dihalide, most preferably phthalic acid dichloride, with the monohydric alcohol.

The compound of a fourvalent Group 4 metal compound containing a halogen is preferably a titanium tetrahalide. Equivalent to titanium tetrahalide is the combination of an alkoxy titanium halide and a halogenation agent therefore, which are able to form a titanium tetrahalide *in* situ. The most preferred halide is the chloride, for zirconium and hafnium as well as for titanium.

The reaction conditions used in the claimed process may be varied according to the used reactants and agents.

As is known, the addition of at least one halogenated hydrocarbon during the process can lead to further improved catalytic activity. Reactive halogenated hydrocarbons preferably have the formula R' "X'"$_n$ wherein R'" is an n-valent $C_1$-$C_{20}$ hydrocarbyl group, particularly a $C_1$-$C_{10}$ paraffin, X'" is a halogen and n is an integer from 1 to 4.

Such chlorinated hydrocarbons include monochloromethane, dichloromethane, trichloromethane (chloroform), tetrachloromethane, monochloroethane, (1,1)-dichloroethane, (1,2)-dichloroethane, (1,1,1)-trichloroethane, (1,1,2)-trichloroethane, (1,1.,1,2)-tetrachloroethane, (1,1,2,2) tetrachloroethane, pentachloroethane, hexachloroethane, (1)-chloropropane, (2)-chloropropane, (1,2)-dichloropropane, (1,3)-dichloropropane, (1,2,3) trichloropropane, (1) - chlorobutane, (2)-chlorobutane, isobutyl chloride, tert.butyl chloride, (1,4)-dichlorobutane, (1) -chloropentane, (1,5)-dichloropentane. The chlorinated hydrocarbons may also be unsaturated, provided that the unsaturation does not act as catalyst poison in the final catalyst component.

In the above formula, R'" is preferably a mono-or bivalent $c_1$-$C_{10}$ alkyl group, independently, X'" is preferably chlorine and, independently, n is preferably 1 or 2. Preferred compounds include butyl chloride (BuCl), dichloroalkanes such as .(1,4)-dichlorobutane, and tertiary butyl chloride.

Though the catalyst preparation according to the inventive method can be carried out batchwise, it is also preferable and possible to prepare the catalyst component semi-continuously or continuously. In such semi-continuous or continuous process, the solution of the complex of the group 2 metal and said electron donor, which is prepared by reacting the compound of said metal with said electron donor in an organic liquid reaction medium, is mixed with at least one compound of a transition metal, which might be solved in the same or different organic liquid reaction medium. The so obtained solution is then agitated, possibly in the presence of an emulsion stabilizer, and then the so-agitated emulsion is fed into a temperature gradient reactor, in which the emulsion is subjected a temperature gradient, thus leading to solidifying the droplets of a dispersed phase of the emulsion. The optional TMA is preferably contained in the solution of the complex or added to the solution before feeding the agitated solution to the temperature gradient reactor.

When feeding said agitated emulsion to the temperature gradient reactor, an inert solvent, in which the droplets are not soluble, can additionally be fed into that gradient reactor in order to improve the droplet formation and thus leading to a uniform grain size of the particles of the catalyst component, which are formed in the temperature gradient reactor when passing through said line. Such additional solvent might be the same as the organic liquid reaction medium, which is used for preparing the solution of the complex of the group 2 metal as explained above in more detail.

The solidified particles of the olefin polymerization catalyst component can subsequently be recovered by an in-stream filtering unit and then, optionally after some additional washing and drying steps in order to remove unreacted starting components, can be stored for further use. In one embodiment the catalyst can be fed after washing steps into the olefin polymerization reactor, so that a continuous preparation and feed to the reactor is guaranteed. It is also possible to mix the solidified and washed catalyst component with an oily fluidic liquid and store and use the catalyst component as a catalyst component-oil slurry. In this way the drying steps can be avoided, which might be sometimes detrimental to the catalyst components morphology. This oil-slurry method is described in general in EP1489110 of the applicant, incorporated herein by reference.

As it can be seen from the above description of the semi-continuous or continuous process, it is thus possible to use separated reaction vessels for the different process steps and to transfer the reaction products which are prepared in the respective reaction vessels and to feed them in-line into further reaction vessels for formation of the emulsion and, subsequently, of the solidified particles.

It is preferred to use a full-continuous process as the time saving in said process is remarkable. In such fully continuous process, the formation of the solidified particles could be carried out in the temperature gradient line in the kind of pipe reactor, which is sufficiently long and which is subjected said temperature gradient from the starting temperature in the lower range of 20 to 80°C up to a "solidifying" temperature of 70 to 150°C. The temperature gradient is preferably obtained by means of heating the pipe reactor from the outside by applying normal heaters, microwaves, etc.

As mentioned before, a filtering unit might preferably be used for filtering the solidified particles from the solvent stream. For said filtering unit, various drums and sieving systems can be used, depending on the specific particle sizes.

Some preferred embodiments of the invention are described, by way of illustration, in the following examples.

In said examples, Examples 1 to 8, in accordance with the invention, illustrate the various modifications when to add the aluminium compound. Comparative Examples 1 to 3 are examples employing an aluminium compound not comprising an alkoxy residue.

In the examples the following measuring methods were used:

Melt Flow Rate, MFR: ISO 1133; 230 °C, 2,16 kg load Xylene solubles, XS: Xylene soluble fraction of product at 25°C .

DETERMINATION OF XYLENE SOLUBLE FRACTION (XS)

2.0 g of polymer are dissolved in 250 ml p-xylene at 135 °C under agitation. After $30\pm2$ minutes the solution is allowed to cool for 15 minutes at ambient temperature and then allowed to settle for 30 minutes at $25\pm0.5$ °C . The solution is filtered with filter paper into two 100 ml flasks.

The solution from the first 100 ml vessel is evaporated in nitrogen flow and the residue is dried under vacuum at 90 °C until constant weight is reached.

$$XS\% = (100 \times m_1 \times v_0) / (m_0 \times v_1)$$

$m_0$ = initial polymer amount (g)
$m_1$ = weight of residue (g)
$v_0$ = initial volume (ml)
$v_1$ volume of analysed sample (ml)

Mw means weight average molecular weight and Mn is the number average molelecular weight determined in a known manner using size exclusion chromatograpy (SEC).

MWD means Mw/Mn, and is determined by said SEC method.

Rheology: Dynamic rheological measurements were carried out with Rheometrics RDA-II QC on compression molded samples under nitrogen atmosphere at 200°C using 25 mm -diameter plate and plate geometry. The oscillatory shear experiments were done within the linear viscoelastic range of strain at frequencies from 0.01 to 500 rad/s. (ISO6721-1)

The values of storage modulus (G'), loss modulus (G"), complex modulus (G*) and complex viscosity ($\eta^*$) were obtained as a function of frequency ($\omega$).

The Zero shear viscosity ($\eta_0$) was calculated using complex fluidity defined as the reciprocal of complex viscosity. Its real and imaginary part are thus defined by

$$f'(\omega) = \eta'(\omega) / [\eta'(\omega)^2 + \eta''(\omega)^2]$$

and

$$f''(\omega) = \eta''(\omega) / [\eta'(\omega)^2 + \eta''(\omega)^2] \;.$$

From the following equations

$$\eta' = G'' / \omega \quad \text{and} \quad \eta'' = G' / \omega$$

$$f'(\omega) = G''(\omega) * \omega / [G'(\omega)^2 + G''(\omega)^2]$$

$$f''(\omega) = G'(\omega) * \omega / [G'(\omega)^2 + G''(\omega)^2]$$

Shear thinning indexes (SHI), which are correlating with MWD and are independent of MW, were calculated according to Heino 1, 2) (below).

SHI is calculated by dividing the Zero Shear Viscosity by a complex viscosity value, obtained at a certain constant shear stress value, G*. The abbreviation, SHI (0/50), is the ratio between the zero shear viscosity and the viscosity at the shear stress of 50 000 Pa.

1) Rheological characterization of polyethylene fractions. Heino, E.L.; Lehtinen, A; Tanner, J.; ; Seppala, J. Neste Oy, Porvoo, Finland. Theor. Appl. Rheol., Proc. Int. Congr. Rheol., 11th (1992), 1 360-362

2) The influence of molecular structure on some rheological properties of polyethylene. Heino, Eeva-Leena. Borealis Polymers Oy, Porvoo, Finland. Annual Transactions of the Nordic Rheology Society, 1995

Example 1

Preparation of the soluble Mg-complex

A magnesium complex solution was prepared by adding, with stirring, 78.0 kg of a 20% solution in toluene of butyloctylmagnesium (BOMAG A) to 27.1 kg 2-ethylhexanol in a 150 1 steel reactor. During the addition the reactor contents were maintained below 35°C. After that 7.98 kg 1,2-phthaloyl dichloride was added and the reaction mixture was stirred for 60 minutes at 60°C. Solution was cooled to room temperature and stored.

Preparation of the catalyst component :

19.5 ml titanium tetrachloride was placed in a 300 ml glass reactor equipped with a.mechanical stirrer. Mixing speed was adjusted to 170 rpm and 32.0 g of the Mg-complex was added to the stirred reaction mixture over a 10-minute period. During the addition of the Mg-complex reactor content was maintained below 30°C. After that 1.0 ml of a solution in toluene of 2.0 mg polydecene and 2.0 ml Viscoplex 1-254 and 10 ml of heptane was added. The temperature of the reaction mixture was then raised to 90°C over a period of 30 minutes and held at that level for 30 minutes with stirring.

After settling and siphoning, 100 ml of toluene containing 1.25 ml of diethyl aluminium ethoxide (Dealox) (10 vol %) was added to the reactor. After 30 minutes mixing solids were settled and liquid was siphonated. Then the solids were washed with 60 ml heptane for 20 minutes at 90°C and with 60 ml pentane for 10 minutes at 25°C. Finally, the catalyst was dried at 60°C by nitrogen purge.

Ti, Mg, Al and DOP contents in the catalyst are disclosed in Table 1.

Polymerisation

Polymerization of propylene at 80°C with the catalyst component was done in a 5 litre reactor with stirrer. Triethyl aluminium (TEA) (cocatalyst) (Al/Ti molar ratio 250), cyclohexyl methyl dimethoxy silane (external donor Do and Al/Do molar ratio 10) and 30 ml pentane were mixed and allowed to react for 5 minutes. Half of the mixture was added to the reactor and the other half was mixed with 19.4 mg of the catalyst component. After 10 minutes the catalyst/TEA/donor/pentane mixture was added to the reactor. 70 mmol hydrogen and 1400 g propylene were added into the reactor and the temperature was raised to 80°C within 20 minutes while mixing. The reaction was stopped after 60 minutes at 80°C by flashing out unreacted propylene with cooling. The results are shown in Table 2.

Polymerization of propylene at 70°C was carried out as at 80°C using 18.8 mg of the catalyst component. Activity at 70°C was 25,6 kg PP/g cat.

The results are shown in Tables 2 and 3.

Example 2

Magnesium complex was the same as in Example 1.

Preparation of the catalyst component :

19.5 ml titanium tetrachloride was placed in a 300 ml glass reactor equipped with a mechanical stirrer. Mixing speed was adjusted to 170 rpm. 32.0 g of the Mg-complex was added to the stirred reaction mixture over a 10-minute period. During the addition of the Mg-complex the reactor content was maintained below 30°C. Then 1.0 ml of a solution in toluene of 3.0 mg polydecene and 2.0 ml Viscoplex 1-254 and 10.ml of heptane was added. The temperature of the reaction mixture was then slowly raised to 90°C over a period of 30 minutes and held at that level for 30 minutes with stirring.

After settling and siphoning, 100 ml of toluene containing 1.25 ml of diethyl aluminium ethoxide (10 vol%) was added to the reactor. Then 30 ml of $TiCl_4$ was added keeping the temperature at 90°C.

Then the solids were washed with 60 ml heptane for 20 minutes at 90°C and with 60 ml pentane for 10 minutes at 25°C. Finally, the catalyst component was dried at 60°C by nitrogen purge.

Ti, Mg, Al and DOP contents in the catalyst are disclosed in Table 1.

Polymerization of propylene at 80°C was carried out as in Example 1 using 15.3 mg of the catalyst component.

Catalyst composition and polymerization results are shown in Tables 1, 2 and 3.

Example 3

Magnesium complex was the same as in Example 1.

Preparation of the catalyst component was done as in Example 2, except Dealox amount was 1.5 mol.

Polymerization was carried out as in the Example 1 at 80°C using 13.4 mg of the catalyst component and at 70°C using 17.1 mg of the catalyst component. Activity at 70°C was 39,9 kg PP/g cat.

Catalyst composition and polymerization results are shown in Tables 1, 2 and 3.

Example 4

Magnesium complex was the same as in Example 1.

Preparation of the catalyst component was done as in Example 3, except $TiCl_4$ wash was done at 100°C.

Polymerization was carried out at 80°C as in the Example 1 using 15.2 mg of the catalyst component.

Catalyst composition and polymerization results are shown in Tables 1, 2 and 3.

Example 5

Magnesium complex was the same as in Example 1.

Preparation of the catalyst component was done as in Example 3, except $TiCl_4$ wash was done at 80°C.

Polymerization was carried out at 80°C as in the Example 1 using 15.0 mg of the catalyst component.

Catalyst composition and polymerization results are shown in Tables 1, 2 and 3.

Example 6

Magnesium complex was the same as in Example 1.

Preparation of the catalyst component was done as in Example '5, except Dealox amount was 2.5 ml.

Polymerization was carried out at 80°C as in the Example 1 using 13.0 mg of the catalyst component.
Catalyst composition and polymerization results are shown.in Tables 1, 2 and 3.

Example 7

Magnesium complex was the same as in Example 1.
Preparation of the catalyst component was done as in Example 5, except that $TiCl_4$ was diluted with toluene in a ratio of 1:3 (1 part (7.5 ml) $TiCl_4$ and 3 parts (22.5 ml) toluene).
Polymerization was carried out at 80°C as in Example 1 using 14.0 mg of the catalyst component.
Catalyst composition and polymerization results are shown in Tables 1, 2 and 3.

Example 8

Magnesium complex was the same as Example 1.

Preparation of the catalyst component :

19.5 ml titanium tetrachloride was placed in a 300 ml glass reactor equipped with a mechanical stirrer. Mixing speed was adjusted to 170 rpm and 32.0 g of the Mg-complex was added to the stirred reaction mixture over a 10-minute period. During the addition of the Mg-complex the reactor content was maintained blow 30°C. Then 1.5 ml Dealox was added to the reaction mixture. After that 1.0 ml of a solution in toluene of 2.0 mg polydecene and 2.0 ml Viscoplex 1-254 and 10 ml of heptane was added. The temperature of the reaction mixture was then raised to 90°C over a period of 30 minutes and held at that level for 30 minutes with stirring.
After settling and siphoring, 30 ml of $TiCl_4$ was added keeping the temperature at 90°C. After 30 minutes mixing solids were settled and liquid was siphonated. Then the solids were washed with 100 ml toluene for 30 minutes at 90°C, with 60 ml heptane for 20 minutes at 90°C and with 60 ml pentane for 10 minutes at 25°C. Finally, the catalyst was dried at 60°C by nitrogen purge. Polymerization was carried out at 80°C as in Example 1 using 13.0 mg of the catalyst component.
Catalyst composition and polymerization results are shown in Tables 1, 2 and 3.

Comparative Example 1

Magnesium complex was the same as Example 1.

Preparation of the catalyst component :

19.5 ml titanium tetrachloride was placed in a 300 ml glass reactor equipped with a mechanical stirrer. Mixing speed was adjusted to 170 rpm. 1.0 ml of a solution in toluene of 3.0 mg polydecene and 2.0 ml Viscoplex 1-254, 32.0 g of the Mg-complex were added to the stirred reaction mixture over a 10-minute period. During the addition of the Mg-complex the reactor content was maintained below 30°C. After that, 10 ml heptane was added. The temperature of the reaction mixture was then slowly raised to 90°C over a period of 30 minutes and held at that level for 30 minutes with stirring.
After settling and siphoning, 100 ml of toluene containing 0.33 ml of diethyl aluminium chloride was added to the reactor. After 30 minutes mixing solids were settled and liquid was siphonated. Then 30 ml of $TiCl_4$ was added keeping the temperature at 90°C.
Then the solids were washed with 60 ml heptane for 20 minutes at 90°C and with 60 ml pentane for 10 minutes at 25°C. Finally, the catalyst was dried at 60°C by nitrogen purge.
Polymerization was carried out at 80°C as in Example 1 using 19 mg of the catalyst component.
Catalyst composition and polymerization results are shown in Tables 1, 2 and 3.

Comparative Example 2

Magnesium complex was the same as Example 1.

Preparation of the catalyst component

19.5 ml titanium tetrachloride were placed in a 300 ml glass reactor equipped with a mechanical stirrer. Mixing speed was adjusted to 170 rpm. After addition of 10.0 ml n-heptane, 1.0 ml of a solution in toluene of 3.0 mg polydecene and 2.0 ml Viscoplex 1-254, 32.0 g of the Mg-complex were added to the stirred reaction mixture over a 10 minute period.

During the addition of the Mg-complex the reactor contents were maintained below 30°C.

The temperature of the reaction mixture was then slowly raised to 90°C over a period of 20 minutes and held at that level for 30 minutes with stirring.

After settling and syphoning 100 ml toluene containing 0,10 ml of the aluminium compound (TEA, triethylaluminium) was added to the reaction mixture. After 30 minutes mixing the solids were settled and liquid was siphonated.

Then the solids were'washed with 100 ml toluene at 90°C for 30 minutes, 60 ml heptane for 20 minutes at 90°C and 60 ml pentane for 10 minutes at 25°C. Finally, the solids were dried at 60 °C by nitrogen purge, to yield a yellow, air-sensitive powder.

Polymerization was carried out at 70°C and 80°C as in Example 1 using 18,6 mg of the catalyst component. Activity at 70°C was 26,8 kg PP/g cat.

Catalyst composition and polymerization results are shown in Tables 1, 2 and 3.

Comparative Example 3.

The catalyst preparation was carried out as in Comparative Example 2, but the amount of TEA used was 0,50 ml.

Polymerization was carried out at 70°C and 80°C as in Example 1 using 17,4 mg of the catalyst component. Activity at 70°C was 22,4 kg PP/g cat.

Catalyst composition and polymerization results are shown in Tables 1, 2 and 3.,

Table 1A : Catalyst component compositions

| Catalyst /example | Mg wt-% | Ti wt-% | DOP wt-% | Al wt-% |
|---|---|---|---|---|
| Example 1 | 12.5 | 3.9 | 25.9 | 0.09 |
| Example 2 | 14.2 | 3.7 | 18.4 | 0.1 |
| Example 3 | 13.3 | 4.0 | 19.3 | 0.0 |
| Example 4 | 14.0 | 3.9 | 17.6 | 0.07 |
| Example 5 | 14.3 | 4.3 | 16.7 | 0.07 |
| Example 6 | 12.5 | 5.2 | 11.8 | 0.04 |
| Example 7 | 15.1 | 3.6 | 23.5 | 0.11 |
| Example 8 | 13.1 | 3.6 | 23.0 | 0.16 |
| Comp. Ex. 1 | 9.9 | 6.9 | 22.7 | 0.58 |
| Comp.Ex. 2 | 12,5 | 4,8 | 28,4 | 0,30 |
| Comp.Ex. 3 | 8, 8 | 8, 4 | 17, 8 | 0, 68 |
| DOP = diethylhexylphtalate | | | | |

Table 1B: Amount of added Al and Al content in catalyst component

| Example | Al added/ mmol | Al in cat /mmol | Al in cat/Al added mmol/mmol |
|---|---|---|---|
| Example 1 | 0, 83 | 0, 14 | 0, 17 |
| Example 2 | 0, 83 | 0, 16 | 0, 19 |
| Example 3 | 1, 0 | 0, 0 | 0 |
| Example 4 | 1, 0 | 0, 10 | 0, 10 |
| Example 5 | 1, 0 | 0, 10 | 0, 10 |
| Example 6 | 1, 0 | 0, 08 | 0, 08 |
| Example 7 | 1, 0 | 0, 18 | 0, 18 |
| Example 8 | 1, 0 | 0, 28 | 0, 28 |
| Comp.Ex. 1 | 2, 6 | 1, 35 | 0, 52 |

(continued)

| Example | Al added/ mmol | Al in cat /mmol | Al in cat/Al added mmol/mmol |
|---|---|---|---|
| Comp.Ex. 2 | 0, 7 | 0, 43 | 0, 61 |
| Comp.Ex. 3 | 3, 7 | 2, 0 | 0, 54 |

Table 2: Polymerization results

| example | Activity(80°C)/ kgPP/g cat | MFR (80°C) | XS (80°C) |
|---|---|---|---|
| 1 | 34.7 | 10.2 | 1.4 |
| 2 | 51.3 | 7.3 | 2.0 |
| 3 | 50.9. | 8.2 | 2.5 |
| 4 | 46.8 | 8.2 | 2.5 |
| 5 | 50.5 | 7.7 | 2.2 |
| 6 | 45.2 | 7.0 | 1.7 |
| 7 | 44.5 | 7.4 | 1.6 |
| 8 | 39.4 | 6.8 | 2.2 |
| Comp.Ex 1 | 14.1 | 16.3 | 3.3 |
| Comp.Ex 2 | 38.2 | 9.5 | 2.0 |
| Comp.Ex 3 | 25.3 | 13.6 | 4.3 |

Table 3: Polymer properties for polymers of examples 2, 3, 5 and 6 (polymerization at 80 °C.

| example | SHI (0/50) | Mw | Mn | Mwd |
|---|---|---|---|---|
| Example 2 | 5.1 | 274000 | 64600 | 4.2 |
| Example 3 | 5.6 | 274000 | 66100 | 4.1 |
| Example 5 | 5.8 | 274000 | 72200 | 3.8 |
| Example 6 | 5.9 | 266000 | 72300 | 3.7 |

The examples as contained in the present application, in particular in comparison with the comparative examples provided, clearly show that the addition of a specific type of aluminium compound as defined in the present invention surprisingly leads to a very high activity with respect to polymerizations at higher temperatures, and still the Al content in the final catalyst component is very low or even zero.

The activity and the Al content in the final catalyst are to some extent also dependent on the stage, where the Al content is added. It can be seen that by adding the Al compound together with the washing medium, the activity will be higher.

Low Al content is shown by the Al wt-% content in the catalyst component as well by the ratio of the Al in catalyst(mmol)/Al added (mmol) to the catalyst component synthesis. As can be seen in the examples the ratio Al in cat/Al added is much lower in the catalyst components prepared according to the present invention. It shows that the Al alkoxy compounds used in the invention apparently are removed more easily from the catalyst component. As a result a catalyst component is obtained yielding a catalyst having a very high activity at high polymerisation temperatures and still a low amount of Al in the final catalyst.

In addition good polymerisation results are obtained without detrimental effect on the polymer produced.

**Claims**

1. Process for preparing an olefin polymerization catalyst component in the form of particles having a predetermined size range of 5 to 200 μm, said process comprising the steps of:

a) preparing a solution of a complex of a Group 2 metal and an electron donor by reacting a compound of said metal with said electron donor in an organic liquid reaction medium;

b) adding said solution of said complex to at least one compound of a transition metal to produce an emulsion the dispersed phase of which contains more than 50 mol% of the Group 2 metal in said complex;

c) agitating the emulsion in order to maintain the spherical droplets of said dispersed phase within such an average size range of 5 to 200μm;

d) solidifying said droplets of the dispersed phase

e) recovering the solidified particles of the olefin polymerization catalyst component;

wherein an aluminium compound of the general formula

$AlR_{3-n}X_n$ wherein R stands for a straight chain or branched alkoxy group having 1 to 20, preferably 1 to 10 and more preferably 1 to 6 carbon atoms, X independently represents a residue selected from the group of halogen and alkyl and n stands for 1 or 2, is added and brought into contact with the droplets of the dispersed phase of the agitated emulsion of the solidified particles before recovering the solidified particles in step e),

wherein the recovered particulate product is washed at least once with a hydrocarbon, and wherein the aluminium component is not added to the last washing.

2. The process of claim 1, wherein, in step c), the emulsion is agitated in the presence of an emulsion stabilizer and/or a turbulence minimizing agent (TMA), wherein said emulsion stabilizer is a surfactant, wherein said surfactant comprises an acrylic polymer and/or methacrylic polymer, wherein the turbulence minimizing agent is added to the reaction mixture before solidifying said droplets of the dispersed phase, said TMA being inert and soluble in the reaction mixture under the reaction conditions, and wherein the turbulence minimizing agent is selected from polymers of octene, nonene, decene, undecene, dodecene, copolymers or mixtures of polymers thereof, preferably polydecene.

3. The process of claim 1 or 2, further comprising washing said solidified particles prior to recovering in step e).

4. A process according to any preceding claim wherein the aluminium alkoxy compound of the general formula $AlR_{3-n}X_n$ is brought into contact with the droplets of the dispersed phase of the agitated emulsion or the solidified particles before recovering the solidified particles in step e) in an amount so that the final catalyst component particles have Al content of 0,0 to 0,7 %, preferably 0,02 to 0,5 %, most preferably 0,04 to 0,3 % by weight.

5. A process according to claim 3 or 4 wherein the aluminium alkoxy compound is brought into contact with the solidified particles during the washing step.

6. A process according to any preceding claim wherein an aluminium alkoxy compound of the general formula $AlR_{3-n}X_n$ wherein R stands for a straight chain or branched alkoxy group having 1 to 6 carbon atoms, X stands for ethyl and n stands for 1 or 2 is used.

7. A process according to any of the preceding claims, wherein n is 2, R is ethoxide and X is ethyl.

8. A process according to any preceding claim wherein said Group 2 metal is magnesium.

9. A process according to any preceding claim wherein said organic liquid medium comprises a $C_6$-$C_{10}$ aromatic hydrocarbon or a mixture of $C_6$-$C_{10}$ aromatic hydrocarbon and $C_5$-$C_8$ aliphatic hydrocarbons.

10. A process according to any preceding claim wherein said liquid reaction mediums comprises toluene.

11. A process according to any preceding claim wherein said electron donor is a mono- or diester of an aromatic carboxylic acid or diacid.

12. A process according to claim 11 wherein said aromatic carboxylic acid ester or diester is formed in situ by reaction of an aromatic carboxylic acid chloride or diacid dichloride with a $C_2$-$C_{16}$ alkanol and/or diol.

13. A process according to claim 11 or 12 wherein said aromatic carboxylic acid ester is diethylhexyl phthalate.

14. A process according to any preceding claim wherein the preparation of the Group 2 metal complex is carried out at a temperature of 20° to 80°C.

15. A process according to 14 wherein the Group 2 metal is magnesium and the preparation of the magnesium complex is carried out at a temperature of 50° to 70°C.

16. A process according to any preceding claim wherein said transition metal is a Group 4 metal, a Group 5 metal and/or a Group 6 metal or is Cu, Fe, Co, Ni and/or Pd or mixtures thereof.

17. A process according to claim 16 wherein said transition metal is a Group 4 metal, preferably titanium.

18. A process according to any of claims 16 or 17 wherein said compound of the transition metal is a halide.

19. A process according to any preceding claim wherein the mol ratio of the transition metal metal/ Group 2 metal of said disperse phase is 20 to 80.

20. The process according to claim 19 wherein the mol ratio of the transition metal/ Group 2 metal of said disperse phase is 45 to 75.

21. The process according to any preceding claim wherein said Group 2 metal complex and said transition metal compound are reacted at a temperature of 10° to 60°C.

22. A process according to claim 21 wherein said Group 2 metal complex is a magnesium complex and said transition metal compound is a Group 4 metal compound which are reacted in a temperature range from 20° to 50°C.

23. A process according to any preceding claim wherein said emulsion is composed of a first dispersed phase which is a toluene/$TiCl_4$-insoluble-oil having a Group 4 metal/Mg mol ratio greater than 0.1 and less than 10 and a second disperse phase which is an oil less dense than that of the dispersed phase and which has a Group 4 metal/Mg mol ratio of 10 to 100.

24. A process according to claim 22 wherein the Group 4 metal/Mg mol ratio of said dispersed denser oil is 2 to 4 and that of the disperse phase oil is 55 to 65.

25. Process for polymerising olefins, in particular $C_2$ to $C_{10}$ α-olefins, preferably propylene or ethylene or copolymers thereof with other α-olefins, by employing an olefin polymerization catalyst component obtained according to the process in accordance with any of claims 1 to 24 and a cocatalyst, preferably an alkylaluminium cocatalyst and optionally an external electron donor.

26. The process for polymerizing olefins in accordance with claim 25, wherein the particles of the catalyst component have an Al content less than 0,15 wt-% and activity higher than 44 kg PP/g cat.

27. The process for polymerizing olefins in accordance with claim 26, wherein propylene or copolymers thereof are polymerized with other α-olefins.


**Patentansprüche**

1. Verfahren zum Herstellen einer Olefinpolymerisationskatalysatorkomponente in der Form von Partikeln, die einen vorbestimmten Größenbereich von 5 bis 200 μm besitzen, wobei besagter Prozess die Schritte umfasst:

    a) Herstellen einer Lösung eines Komplexes eines Gruppe-2-Metalls und eines Elektronendonors durch Reagieren einer Verbindung von besagtem Metall mit besagtem Elektronendonor in einem organischen flüssigen Reaktionsmedium;
    b) Zugeben besagter Lösung von besagtem Komplex zu mindestens einer Verbindung eines Übergangsmetalls um eine Emulsion herzustellen, deren dispergierte Phase mehr als 50 mol% des Gruppe-2-Metalls in besagtem Komplex enthält;
    c) Rühren der Emulsion um die sphärischen Tropfen von besagter dispergierter Phase innerhalb solch eines durchschnittlichen Größenbereichs von 5 bis 200 μm beizubehalten;

d) Verfestigen besagter Tropfen der dispergierten Phase;
e) Gewinnen der verfestigten Partikel der Olefinpolymerisationskatalysatorkomponente;

wobei eine Aluminiumverbindung der folgenden allgemeinen Formel $AlR_{3-n}X_n$, wobei R für eine geradkettige oder verzweigte Alkoxygruppe steht, die 1 bis 20, bevorzugt 1 bis 10, und mehr bevorzugt 1 bis 6 Kohlenstoffatome besitzt, X unabhängig einen Rest darstellt, ausgewählt aus der Gruppe von Halogen und Alkyl, und n für 1 oder 2 steht, zugegeben wird und in Kontakt gebracht wird mit den Tropfen der dispergierten Phase der gerührten Emulsion der verfestigten Partikel vor dem Gewinnen der verfestigten Partikel in Schritt e),
wobei das gewonnene partikuläre Produkt mindestens einmal mit einem Kohlenwasserstoff gewaschen wird, und wobei die Aluminiumkomponente nicht zum letzten Waschen zugegeben wird.

2. Verfahren nach Anspruch 1, wobei, in Schritt c), die Emulsion in der Gegenwart eines Emulsionsstabilisators und/oder eines Verwirbelungsminimierungsmittels (TMA) gerührt wird, wobei besagter Emulsionsstabilisator ein Tensid ist, wobei besagtes Tensid ein Acrylpolymer und/oder Methacrylpolymer umfasst, wobei das Verwirbelungsminimierungsmittel zur Reaktionsmischung zugegeben wird bevor besagte Tropfen in der dispergierten Phase verfestigt werden, wobei besagtes TMA inert und in der Reaktionsmischung unter den Reaktionsbedingungen löslich ist, und wobei das Verwirbelungsminimierungsmittel ausgewählt ist aus Polymeren von Octen, Nonen, Decen, Undecen, Dodecen, Copolymeren oder Mischungen von Polymeren davon, bevorzugt Polydecen.

3. Das Verfahren nach Anspruch 1 oder 2, weiter umfassend das Waschen besagter verfestigter Partikel vor dem Gewinnen in Schritt e).

4. Verfahren gemäß irgendeinem vorhergehenden Anspruch, wobei die Aluminiumalkoxyverbindung der allgemeinen Formel $AlR_{3-n}X_n$ in Kontakt gebracht wird mit den Tropfen der dispergierten Phase der gerührten Emulsion oder den verfestigten Partikeln vor dem Gewinnen der verfestigten Partikel in Schritt e) in einer Menge, so dass die resultierenden Katalysatorkomponentenpartikel einen Al Anteil von 0,0 bis 0,7 Gew.-%, bevorzugt 0,02 bis 0,5 Gew.-%, am meisten bevorzugt 0,4 bis 0,3 Gew.-% besitzen.

5. Verfahren gemäß Anspruch 3 oder 4, wobei die Aluminiumalkoxyverbindung in Kontakt gebracht wird mit den verfestigten Partikeln während dem Schritt des Waschens.

6. Verfahren gemäß irgendeinem der vorhergehenden Ansprüche, wobei eine Aluminiumalkoxyverbindung der allgemeinen Formel $AlR_{3-n}X_n$, wobei R für eine geradkettige oder verzweigte Alkoxygruppe steht, die 1 bis 6 Kohlenstoffatome besitzt, X für Ethyl steht, und n für 1 oder 2 steht, verwendet wird.

7. Verfahren gemäß irgendeinem der vorherstehenden Ansprüche, wobei n 2 ist, R Ethoxid ist, und X Ethyl ist.

8. Verfahren gemäß irgendeinem der vorherstehenden Ansprüche, wobei besagtes Gruppe-2-Metall Magnesium ist.

9. Verfahren gemäß irgendeinem der vorherstehenden Ansprüche, wobei besagtes organisches flüssiges Reaktionsmedium einen $C_6$-$C_{10}$ aromatischen Kohlenwasserstoff oder eine Mischung von $C_6$-$C_{10}$ aromatischem Kohlenwasserstoff und $C_5$-$C_8$ aliphatischen Kohlenwasserstoffen umfasst.

10. Verfahren gemäß irgendeinem der vorherstehenden Ansprüche, wobei besagtes flüssiges Reaktionsmedium Toluol umfasst.

11. Verfahren gemäß irgendeinem der vorherstehenden Ansprüche, wobei besagter Elektronendonor ein Mono- oder Diester einer aromatischen Carbonsäure oder Disäure ist.

12. Verfahren gemäß Anspruch 11, wobei besagter aromatischer Carbonsäureester oder Diester in situ gebildet wird durch Reaktion eines aromatischen Carbonsäurechlorids oder eines Disäure-Dichlorids mit einem $C_2$-$C_{16}$ Alkanol und/oder Diol.

13. Verfahren gemäß Anspruch 11 oder 12, wobei besagter aromatischer Carbonsäureester Diethylhexylphthalat ist.

14. Verfahren gemäß irgendeinem der vorherstehenden Ansprüche, wobei die Herstellung des Gruppe-2-Metallkomplexes bei einer Temperatur von 20°C bis 80°C durchgeführt wird.

**15.** Verfahren gemäß Anspruch 14, wobei das Gruppe-2-Metall Magnesium ist und die Herstellung des Magnesiumkomplexes bei einer Temperatur von 50°C bis 70°C durchgeführt wird.

**16.** Verfahren gemäß irgendeinem der vorhergehenden Ansprüche, wobei besagtes Übergangsmetall ein Gruppe-4-Metall, ein Gruppe-5-Metall und/oder ein Gruppe-6-Metall ist oder Cu, Fe, Co, Ni und/oder Pd oder Mischungen davon ist.

**17.** Verfahren gemäß Anspruch 16, wobei besagtes Übergangsmetall ein Gruppe-4-Metall, bevorzugt Titan, ist.

**18.** Verfahren gemäß irgendeinem der Ansprüche 16 oder 17, wobei besagte Verbindung des Übergangsmetalls ein Halogen ist.

**19.** Verfahren gemäß irgendeinem der vorherstehenden Ansprüche, wobei das Molverhältnis von Übergangsmetall-Metall/Gruppe-2-Metall von besagter dispersen Phase 20 bis 80 ist.

**20.** Verfahren gemäß Anspruch 19, wobei das Molverhältnis von Übergangsmetall/Gruppe-2-Metall von besagter dispersen Phase 45 bis 75 ist.

**21.** Verfahren gemäß irgendeinem der vorherstehenden Ansprüche, wobei besagter Gruppe-2-Metallkomplex und besagte Übergangsmetallverbiridung bei einer Temperatur von 10°C bis 60°C reagiert werden.

**22.** Verfahren gemäß Anspruch 21, wobei besagter Gruppe-2-Metallkomplex ein Magnesiumkomplex ist, und besagte Übergangsmetallverbindung eine Gruppe-4-Metallverbindung ist, die in einem Temperaturbereich von 20°C bis 50°C reagiert werden.

**23.** Verfahren gemäß irgendeinem der vorherstehenden Ansprüche, wobei besagte Emulsion zusammengesetzt ist aus einer ersten dispergierten Phase, die ein Toluol/TiCl$_4$-unlösliches-Öl ist, das ein Gruppe-4-Metall/Mg Molverhältnis von größer als 0,1 und weniger als 10 besitzt, und einer zweiten dispersen Phase, die ein Öl ist, das eine geringere Dichte besitzt, als die der dispergierten Phase, und die ein Gruppe-4-Metall/Mg Molverhältnis von 10 bis 100 besitzt.

**24.** Verfahren gemäß Anspruch 22, wobei das Gruppe-4-Metall/Mg Molverhältnis von besagtem dispergierten, dichteren Öl 2 bis 4 ist, und das des Öls der dispersen Phase 55 bis 65 ist.

**25.** Verfahren zum Polymerisieren von Olefinen, insbesondere C$_2$-C$_{10}$ $\alpha$-Olefinen, bevorzugt Propylen oder Ethylen oder Copolymeren davon, mit anderen $\alpha$-Olefinen, unter Verwenden einer Olefinpolymerisationskatalysatorkomponente, die erhalten wird gemäß dem Verfahren gemäß irgendeinem der Ansprüche 1 bis 24, und einem Cokatalysator, bevorzugt einem Alkylaluminium-Cokatalysator, und optional einem externen Elektronendonor.

**26.** Verfahren zum Herstellen von Olefinen gemäß Anspruch 25, wobei die Partikel der Katalysatorkomponente einen Al Anteil von weniger als 0,15 Gew.-% und eine Aktivität von höher als 44 kg PP/g Kat. besitzen.

**27.** Verfahren zum Polymerisieren von Olefinen gemäß Anspruch 26, wobei Propylen oder Copolymere davon mit anderen $\alpha$-Olefinen polymerisiert werden.

**Revendications**

**1.** Processus de préparation d'un composant catalyseur de polymérisation d'oléfine sous forme de particules ayant une plage de taille prédéterminée de 5 à 200 $\mu$m, ledit processus comprenant les étapes suivantes :

a) préparation d'une solution d'un complexe d'un métal du groupe 2 et d'un donneur d'électron en faisant réagir un composé dudit métal avec ledit donneur d'électron dans un milieu de réaction organique liquide ;
b) ajout de ladite solution dudit complexe à au moins un composé d'un métal de transition pour produire une émulsion dont la phase dispersée contient plus de 50 % mol du métal du groupe 2 dans ledit complexe ;
c) agitation de l'émulsion de manière à maintenir les gouttelettes sphériques de ladite phase dispersée dans une telle plage de taille moyenne de 5 à 200 $\mu$m ;
d) solidification desdites gouttelettes de la phase dispersée ;
e) récupération des particules solidifiées du composant catalyseur de polymérisation d'oléfine ;

dans lequel un composé d'aluminium répondant à la formule générale $AlR_{3-n}X_n$, où R désigne un groupe alcoxyle à chaîne linéaire ou ramifiée comportant de 1 à 20, de préférence de 1 à 10, et de préférence encore de 1 à 6 atomes de carbone, X représente indépendamment un résidu sélectionné parmi l'ensemble constitué par les halogènes et les alkyles, et n représente 1 ou 2, est ajouté et mis en contact avec les gouttelettes de la phase dispersée de l'émulsion agitée de particules solidifiées avant la récupération des particules solidifiées à l'étape e),
dans lequel le produit particulaire récupéré est lavé au moins une fois avec un hydrocarbure, et dans lequel le composé d'aluminium n'est pas ajouté au dernier lavage.

2. Processus selon la revendication 1 dans lequel, à l'étape c), l'émulsion est agitée en présence d'un stabilisateur d'émulsion et/ou d'un agent de minimisation de turbulence (TMA), dans lequel ledit stabilisateur d'émulsion est un tensioactif, dans lequel ledit tensioactif comprend un polymère acrylique et/ou un polymère méthacrylique, dans lequel l'agent de minimisation de turbulence est ajouté au mélange de réaction avant la solidification desdites gouttelettes de la phase dispersée, ledit agent TMA étant inerte et soluble dans le mélange de réaction sous les conditions de réaction, et dans lequel l'agent de minimisation de turbulence est sélectionné parmi les polymères de l'octène, du nonène, du décène, de l'undécène, du dodécène ou des copolymères et mélanges de ceux-ci, et de préférence le polydécène.

3. Processus selon la revendication 1 ou 2, comprenant en outre le lavage desdites particules solidifiées avant la récupération de l'étape e).

4. Processus selon l'une quelconque des revendications précédentes, dans lequel le composé alcoxyle d'aluminium de la formule générale $AlR_{3-n}X_n$ est mis en contact avec les gouttelettes de la phase dispersée de l'émulsion agitée ou les particules solidifiées avant la récupération des particules solidifiées à l'étape e), dans une quantité telle que les particules du composant catalyseur final présentent une teneur en Al de 0,0 % à 0,7 %, de préférence de 0,02 % à 0,5 %, et de manière préférée entre toutes de 0,04 % à 0,3 % en masse.

5. Processus selon la revendication 3 ou 4, dans lequel le composé alcoxyle d'aluminium est mis en contact avec les particules solidifiées durant l'étape de lavage.

6. Processus selon l'une quelconque des revendications précédentes, dans lequel est utilisé un composé alcoxyle d'aluminium répondant à la formule générale $AlR_{3-n}X_n$, dans laquelle R désigne un groupe alcoxyle à chaîne linéaire ou ramifiée comportant de 1 à 6 atomes de carbone, X est un groupe éthyle, et n représente 1 ou 2.

7. Processus selon l'une quelconque des revendications précédentes, dans lequel n est 2, R est un groupe éthanolate, et X est un groupe éthyle.

8. Processus selon l'une quelconque des revendications précédentes, dans lequel ledit métal du groupe 2 est le magnésium.

9. Processus selon l'une quelconque des revendications précédentes, dans lequel ledit milieu organique liquide comprend un hydrocarbure aromatique en $C_6$-$C_{10}$ ou un mélange d'hydrocarbure aromatique en $C_6$-$C_{10}$ et d'hydrocarbures aliphatiques en $C_5$-$C_8$.

10. Processus selon l'une quelconque des revendications précédentes, dans lequel ledit milieu de réaction liquide comprend du toluène.

11. Processus selon l'une quelconque des revendications précédentes, dans lequel ledit donneur d'électron est un monoester ou un diester d'un acide carboxylique ou dicarboxylique aromatique.

12. Processus selon la revendication 11, dans lequel ledit ester ou diester d'acide carboxylique aromatique est formé *in situ* par la réaction d'un chlorure d'acide carboxylique aromatique ou d'un dichlorure d'acide dicarboxylique aromatique avec un alcanol et/ou un alcanediol en $C_2$-$C_{16}$.

13. Processus selon la revendication 11 ou 12, dans lequel ledit ester d'acide carboxylique aromatique est le phtalate d'éthylhexyle.

14. Processus selon l'une quelconque des revendications précédentes, dans lequel la préparation du complexe de métal du groupe 2 est mise en oeuvre à une température de 20°C à 80°C.

**15.** Processus selon la revendication 14, dans lequel ledit métal du groupe 2 est le magnésium et la préparation du complexe de magnésium est mise en oeuvre à une température de 50°C à 70°C.

**16.** Processus selon l'une quelconque des revendications précédentes, dans lequel ledit métal de transition est un métal du groupe 4, un métal du groupe 5 et/ou un métal du groupe 6, ou est Cu, Fe, Co, Ni et/ou Pd, ou encore un mélange de ceux-ci.

**17.** Processus selon la revendication 16, dans lequel ledit métal de transition est un métal du groupe 4, et de préférence le titane.

**18.** Processus selon l'une quelconque des revendications 16 et 17, dans lequel ledit composé du métal de transition est un halogénure.

**19.** Processus selon l'une quelconque des revendications précédentes, dans lequel le rapport molaire métal de transition / métal du groupe 2 de ladite phase dispersée est de 20 à 80.

**20.** Processus selon la revendication 19, dans lequel le rapport molaire métal de transition / métal du groupe 2 de ladite phase dispersée est de 45 à 75.

**21.** Processus selon l'une quelconque des revendications précédentes, dans lequel ledit complexe de métal du groupe 2 et ledit composé de métal de transition sont mis en réaction à une température de 10°C à 60°C.

**22.** Processus selon la revendication 21, dans lequel ledit complexe de métal du groupe 2 est un complexe de magnésium et ledit composé de métal de transition est un composé de métal du groupe 4, qui sont mis en réaction dans une plage de température de 20°C à 50°C.

**23.** Processus selon l'une quelconque des revendications précédentes, dans lequel ladite émulsion est composée d'une première phase dispersée qui est une huile insoluble toluène/$TiCl_4$ présentant un rapport molaire métal du groupe 4 / Mg supérieur à 0,1 et inférieur à 10, et d'une deuxième phase dispersée qui est une huile moins dense que celle de la phase dispersée et qui présente un rapport molaire métal du groupe 4 / Mg de 10 à 100.

**24.** Processus selon la revendication 22, dans lequel le rapport molaire métal du groupe 4 / Mg de ladite huile dispersée plus dense est de 2 à 4 et celui de l'huile de la phase dispersée est de 55 à 65.

**25.** Processus de polymérisation d'oléfines, en particulier d'$\alpha$-oléfines en $C_2$-$C_{10}$, de préférence de propène, d'éthylène ou de copolymères de ceux-ci avec d'autres $\alpha$-oléfines, en employant un composant catalyseur de polymérisation d'oléfine obtenu conformément au processus selon l'une quelconque des revendications 1 à 24 ainsi qu'un cocatalyseur, de préférence un cocatalyseur alkylaluminium, et éventuellement un donneur d'électron externe.

**26.** Processus de polymérisation d'oléfines selon la revendication 25, dans lequel les particules du composant catalyseur présentent une teneur en Al inférieure à 0,15 % en masse et une activité supérieure à 44 kg PP / g cat.

**27.** Processus de polymérisation d'oléfines selon la revendication 26, dans lequel du propène ou des copolymères de celui-ci sont polymérisés avec d'autres $\alpha$-oléfines.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0155230 A
- EP 713886 A
- EP 856013 A
- WO 0008073 A
- WO 0008074 A
- EP 926165 A
- EP 83074 A
- EP 83073 A
- WO 03000757 A

- WO 2004029112 A
- US 5413979 A
- US 4294948 A
- JP 1403292 A
- EP 1273595 A
- EP 0949280 A1
- US 2951045 A
- EP 1489110 A

**Non-patent literature cited in the description**

- **FRANCKH'SCHE VERLAGSHANDLUNG.** Römpps Chemie-Lexicon. W. Keller & Co, 1973, 1831
- **HEINO, E.L. ; LEHTINEN, A ; TANNER, J. ; SEPPALA, J. NESTE OY ; PORVOO, FINLAND.** Rheological characterization of polyethylene fractions. *Theor. Appl. Rheol., Proc. Int. Congr. Rheol., 11,* 1992, vol. 1, 360-362

- **HEINO, EEVA-LEENA ; BOREALIS POLYMERS OY ; PORVOO, FINLAND.** The influence of molecular structure on some rheological properties of polyethylene. *Annual Transactions of the Nordic Rheology Society,* 1995